# DEMANDE DE BREVET EUROPEEN

(11) **EP 1 323 771 A2**
(43) Date de publication de la demande: **02.07.2003**
(21) Numéro de dépôt: 03005217.9
(22) Date de dépôt: 18.04.2001
(51) Int. Cl.: C08J 9/10, B60C 17/06, B29C 44/08

(54) **Ebauche réticulable et expansible d'appui de sécurité pour pneumatique**

(30) Priorité: 25.04.2000 FR 0005346
(62) Demande divisionnaire de: 01109551.0
(71) Demandeur: Société de Technologie Michelin, 63000 Clermont-Ferrand (FR); Michelin Recherche et Technique S.A., 1763 Granges-Paccot (CH)
(72) Inventeur: Bon, Bernard, 63200 Yssac-La-Tourette (FR)
(74) Mandataire: Bolinches, Michel (FR)

(57) **Abrégé**

La présente invention concerne notamment une ébauche réticulable et expansible d'appui de sécurité élastomère de structure cellulaire à cellules fermées, ledit appui étant destiné à être monté sur une jante de roue à l'intérieur d'une enveloppe de pneumatique.

Selon l'invention, ladite ébauche comprend au moins un élastomère diénique et de l'eau, et elle est telle que ledit élastomère diénique possède un taux molaire d'unités issues de diènes qui est inférieur à 15 %, et que l'eau est présente dans ladite ébauche selon une quantité d'eau allant de 3 pce à 6 pce (pce: parties en poids pour cent parties d'élastomère(s)).

## Description

La présente invention concerne un procédé de fabrication d'un appui de sécurité élastomère réticulé et expansé de structure cellulaire à cellules fermées, ledit appui étant destiné à être monté sur une jante de roue à l'intérieur d'une enveloppe de pneumatique, une ébauche réticulable et expansible destinée à constituer ledit appui à l'état réticulé et expansé, un tel appui et un procédé de réduction de l'échauffement interne en roulage de cet appui suite à une chute de pression. Cet appui de sécurité est utilisable pour équiper des pneumatiques de véhicules de type deux roues ou automobiles, tels que des motos ou des voitures.

L'utilisation d'appuis de sécurité élastomères à cellules fermées est bien connue, pour des pneumatiques de compétition destinés à évoluer sur des parcours accidentés de type « rallye-raid ».

Ces appuis cellulaires sont censés permettre le roulage à pression nulle ou très réduite en assurant un fonctionnement pneumatique de l'enveloppe suite à une perforation de l'enveloppe, sur une distance dépendant notamment des conditions plus ou moins sévères caractérisant ce roulage.

Les appuis cellulaires utilisés pour les motos présentent usuellement une forme torique et, préalablement à leur montage sur une jante de roue, un volume légèrement supérieur à celui de l'espace interne de l'enveloppe, de sorte qu'ils sont censés occuper en permanence la totalité de l'espace interne des enveloppes correspondantes pour les soutenir à pression nulle.

De tels appuis sont généralement obtenus par extrusion d'une composition de caoutchouc réticulable et expansible ayant été soumise à un travail thermo-mécanique, puis par vulcanisation et expansion de cette composition extrudée pour l'obtention d'un appui réticulé et expansé, du fait de la décomposition thermique d'un agent de gonflement initialement présent dans la composition de caoutchouc.

Dans des conditions de roulage sévères à pression nulle, l'échauffement de l'appui conduit à une augmentation de la perméabilité des parois des cellules et, par conséquent, à un échappement progressif d'une partie du gaz qui est contenu dans l'appui. Il en résulte que le volume de l'appui diminue, de sorte que celui-ci n'assure plus efficacement le fonctionnement pneumatique de l'enveloppe au bout d'un certain temps.

Cet échauffement interne est également susceptible de détériorer complètement l'appui au bout d'un certain temps. Le roulage n'est alors plus envisageable.

Les appuis cellulaires utilisés pour les automobiles ne sont censés quant à eux occuper la totalité de l'espace interne d'une enveloppe qu'en cas de roulage à plat suite à une chute de pression, du fait qu'ils sont comprimés par l'air de gonflage du pneumatique lors d'un roulage à pression normale. Les mêmes inconvénients dûs à l'échauffement interne de l'appui peuvent se poser suite à cette chute de pression.

On a cherché par le passé à faire en sorte qu'un appui cellulaire pour automobile puisse se dilater suffisamment à l'intérieur d'une enveloppe suite à une chute de pression, de manière à appuyer efficacement sur l'enveloppe en roulage à plat. On a proposé à cet effet de pourvoir cet appui d'un fluide vaporisable à la pression atmosphérique à une température comprise entre 29° C et 135° C, préférentiellement comprise entre 50° C et 90° C. On pourra se reporter au document de brevet anglais GB-A-2 013 143 pour la description d'un tel appui spécifique pour automobile.

La composition de caoutchouc utilisée pour l'appui décrit dans ce document est préférentiellement à base de mousse de polyéthylène. Ces compositions peuvent également être à base d'une mousse de polypropylène, de polyuréthanne, à base d'un coupage de caoutchouc nitrile et de chlorure de polyvinyle, ou encore de polybutadiène 1,2.

Quant au fluide utilisé, il est censé permettre un gonflement de l'appui en roulage à plat lorsqu'il se vaporise du fait de l'élévation de la température à l'intérieur de l'enveloppe. Ce fluide peut être constitué d'oxyde d'éthylène, de chlorure de méthyle, de « fréon », de mono-alcools, de di-alcools, ou d'eau.

On notera que cet appui n'est pas censé présenter un échauffement interne minimisé en roulage à plat.

La demanderesse a découvert d'une manière surprenante que l'association d'eau, selon une quantité allant de 3 pce à 6 pce (pce: parties en poids pour cent parties d'élastomère(s)), à un élastomère diénique qui possède un taux molaire d'unités issues de diènes inférieur à 15 %, pour mettre en oeuvre une première étape de travail thermo-mécanique d'un procédé de fabrication d'un appui de sécurité élastomère réticulé et expansé de structure cellulaire à cellules fermées, ledit appui étant destiné à être monté sur une jante de roue à l'intérieur d'une enveloppe de pneumatique, ledit procédé consistant essentiellement,
- dans cette première étape, à malaxer une composition de caoutchouc comprenant au moins ledit élastomère diénique, ladite eau, un agent de gonflement pour permettre l'obtention ultérieure de ladite structure cellulaire et un système de vulcanisation,
- dans une seconde étape de façonnage, à façonner la composition de caoutchouc obtenue au terme de la première étape, par exemple par injection ou par extrusion, pour l'obtention d'une ébauche d'appui réticulable et expansible de section prédéterminée, et
- dans une troisième étape de cuisson, à soumettre à une cuisson préliminaire dans un moule l'ébauche obtenue au terme de la seconde étape puis à soumettre l'ébauche pré-cuite et démoulée à une expansion et à une vulcanisation pour l'obtention d'un appui réticulé et expansé par décomposition dudit agent de gonflement,
permet d'obtenir un appui réticulé et expansé qui ne présente pas en roulage les inconvénients précités de perte de volume et de détérioration générés par un échauffement interne excessif.

Par élastomère diénique, on entend de manière connue un élastomère (homopolymère ou copolymère) issu au moins en partie de monomères diènes (monomères porteurs de deux doubles liaisons carbone-carbone, conjuguées ou non).

A titre d'élastomères diéniques possédant un taux molaire d'unités issues de diènes inférieur à 15 % (ces élastomère diéniques sont communément appelés «essentiellement saturés »), on utilise préférentiellement des copolymères d'isobutylène et d'un autre comonomère, tel que l'isoprène (pour l'obtention de caoutchoucs butyle ou «IIR») ou le paraméthylstyrène (pour l'obtention d'élastomères «EMDX», tel que celui commercialisé sous la dénomination « EXXPRO »), notamment en raison de leur perméabilité réduite à l'air.

On notera que les versions halogénées de ces copolymères d'isobutylène et d'isoprène, en particulier chlorées ou bromées (caoutchoucs « BIIR » ou « CIIR », respectivement caoutchoucs bromobutyl et chlorobutyl), sont aussi utilisables.

L'agent de gonflement utilisé dans la première étape de malaxage peut être adjoint à l'élastomère diénique et aux autres constituants de la composition de caoutchouc selon une quantité allant de 15 pce à 30 pce, et il est de préférence constitué d'azobisformamide.

Selon une autre caractéristique de l'invention, on adjoint audit élastomère diénique une charge renforçante comprenant du noir de carbone et de 10 pce à 30 pce de silice, de préférence de 15 pce à 25 pce, pour mettre en oeuvre ladite première étape.

En effet, des essais ont montré que des ébauches à vulcaniser pour l'obtention de d'appuis réticulés et expansés qui ne comportent pas de silice, mais par exemple seulement du noir de carbone à titre de charge renforçante, sont le siège d'une décomposition significative et rapide de l'agent de gonflement lors de ladite cuisson préliminaire, en raison de la présence de l'eau dans l'ébauche. Cette décomposition de l'agent de gonflement se traduit par une expansion prématurée de l'ébauche lors de cette cuisson préliminaire, ce qui rend difficile de démouler l'ébauche pré-cuite sans l'endommager.

On a pu vérifier que cette présence de silice dans l'ébauche permet d'empêcher cette décomposition indésirable de l'agent de gonflement lors de la cuisson préliminaire et, par conséquent, de permettre un démoulage dans des conditions satisfaisantes.

On notera que la silice adjointe à l'élastomère diénique lors de la première étape de malaxage peut être avantageusement hydratée, de telle manière que l'eau ainsi apportée par la silice soit associée à l'élastomère selon la quantité précitée allant de 3 à 6 pce.

La silice pouvant être utilisée pour fabriquer l'appui de l'invention peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées.

Dans le présent exposé, la surface spécifique BET est déterminée de manière connue, selon la méthode de Brunauer-Emmett-Teller décrite dans "The Journal of the American Chemical Society" Vol. 60, page 309, février 1938 et correspondant à la norme AFNOR-NFT-45007 (novembre 1987) ; la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut par exemple citer les silices Zeosil 1165 MP et 1115 MP de la société Rhodia.

Bien entendu on entend également par silice des mélanges de différentes silices, en particulier de silices hautement dispersibles telles que décrites ci-dessus.

On peut également utiliser des silices non hautement dispersibles, telles que la silice Ultrasil VN3 de la société Degussa.

Comme noirs de carbone conviennent notamment les noirs de grade 3, tels que les N339, N347, N375, et les noirs de grade 5, 6 ou 7. La fraction massique de noir de carbone présent dans la charge renforçante peut varier dans de larges limites, cette quantité allant préférentiellement de 40 % à 60 %, pour une fraction massique de silice allant de 60 à 40 %.

Une ébauche réticulable et expansible selon l'invention d'appui de sécurité élastomère de structure cellulaire à cellules fermées, qui comprend au moins un élastomère diénique et de l'eau, est telle que ledit élastomère diénique possède un taux molaire d'unités issues de diènes qui est inférieur à 15 %, et en ce que l'eau est présente dans ladite ébauche selon une quantité allant de 3 pce à 6 pce.

Selon une autre caractéristique de l'invention, cette ébauche réticulable et expansible comprend une charge renforçante comprenant elle-même un coupage de silice et de noir de carbone, la silice étant présente dans l'ébauche selon une quantité allant de 10 à 30 pce.

De préférence, cette ébauche réticulable et expansible est telle que ledit élastomère diénique est un copolymère d'isobutylène et d'un comonomère constitué d'isoprène ou de paraméthylstyrène.

Un appui de sécurité élastomère réticulé et expansé selon l'invention est obtenu par le procédé précité, et il comprend au moins un élastomère diénique possédant un taux molaire d'unités issues de diènes qui est inférieur à 15 %, de préférence constitué dudit copolymère, et une charge renforçante.

Selon l'invention, cet appui réticulé et expansé est tel que ladite charge renforçante comprend de la silice de telle manière que la silice soit présente dans l'appui selon une quantité allant de 10 à 30 pce, et il comprend également un agent de gonflement, par exemple de l'azobisformamide, selon une quantité supérieure à 2 pce.

Avantageusement, l'agent de gonflement est présent dans l'appui réticulé et expansé de l'invention selon une quantité supérieure à 5 pce.

Cette quantité moyenne relativement élevée d'agent de gonflement qui est encore présent dans l'appui réticulé et expansé permet de disposer d'un potentiel de regonflement plus élevé lors d'un roulage à pression nulle, ce potentiel de regonflement se traduisant par un roulage effectué sous une pression plus élevée à l'intérieur de l'enveloppe de pneumatique.

Le procédé selon l'invention de réduction de l'échauffement interne d'un appui de sécurité de structure cellulaire à cellules fermées, lequel est monté sur une jante de roue à l'intérieur d'une enveloppe de pneumatique en vue d'assurer un fonctionnement pneumatique de l'enveloppe suite à une chute de pression, consiste à utiliser un appui réticulé et expansé obtenu par le procédé de fabrication précité selon l'invention.

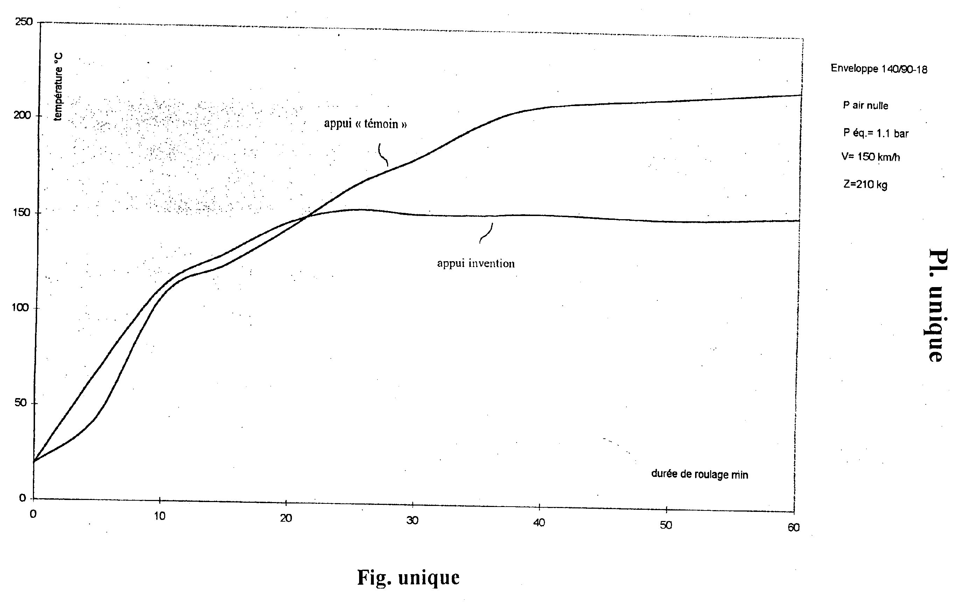

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant réalisée en relation avec le dessin joint, dans lequel :
La Fig. unique est un graphique illustrant l'échauffement interne en roulage à pression nulle d'un appui selon l'invention en comparaison de celui d'un appui « témoin ».

### I. Fabrication d'un appui selon l'invention et d'un appui « témoin »:

On a fabriqué deux appuis de sécurité de structure cellulaire à cellules fermées qui sont utilisables à l'état réticulé et expansé pour équiper des pneumatiques de type moto, respectivement un appui « témoin» et un appui selon l'invention.

Chacun de ces deux appuis présente une même matrice élastomère, qui est constituée d'un copolymère d'isoprène et d'isobutylène, une géométrie torique caractérisée par un diamètre égal à 120 mm et une même densité sensiblement égale à 0,1.

Ces appuis sont destinés à être utilisés à l'intérieur d'un ensemble monté de dimensions 140/90-18 (dans lequel la largeur de l'enveloppe est de 140 mm, l'espacement entre les sièges de jante est de 90 mm et le diamètre de la jante mesuré à l'emplacement d'un siège de jante est de 18 pouces).

Chaque appui a été fabriqué en mettant en oeuvre un procédé de fabrication qui est décrit ci-après.
- Dans une première étape de travail thermo-mécanique, on a procédé, en vue de l'obtention de chacune des compositions de caoutchouc réticulables et expansibles destinées à constituer les deux appuis précités, à un malaxage dans un mélangeur interne de la composition correspondante comprenant notamment ladite matrice élastomère, un agent de gonflement et un système de vulcanisation.
Cette première étape est caractérisée par une température de tombée d'environ 120° C.
On notera que la composition réticulable et expansible destinée à constituer un appui selon l'invention comprend de l'eau, à la différence de la composition « témoin ».
On notera également que cette composition selon l'invention comporte un coupage de silice et de noir de carbone à titre de charge renforçante, alors que la composition « témoin » comporte une charge renforçante qui est constituée de noir de carbone.
Les quantités utilisées pour l'introduction des divers constituants dans le mélangeur, en vue de l'obtention de ces deux compositions réticulables, sont répertoriées dans le tableau I suivant.

**Tableau I**

| (pce: parties en poids pour cent parties d'élastomère). | | |
|---|---|---|
| Constituants introduits dans le mélangeur | Quantités (pce) composition réticulable « témoin » | Quantités (pce) composition réticulable « invention » |
| Noir de carbone N683 | 40 | 20 |
| Silice hydratée | - | 22,5 |
| Huile aromatique | 10 | 10 |
| ZnO | 4,5 | 4 |
| acide stéarique | 3,5 | - |
| cire anti-ozone | 3 | 3 |
| anti-oxydant | 2 | - |
| Système de vulcanisation: | | |
| - soufre | 1,8 | 1,8 |
| - disulfure tétraméthyl thiuram | 1,4 | 1,4 |
| - mercaptobenzothiazole | 0,5 | 0,5 |
| agent de gonflement : azobisformamide « GENITRON AC » | 13 | 26 |

On notera que la silice hydratée utilisée dans la composition selon l'invention présente, d'une part, une fraction massique d'eau qui est sensiblement égale à 18 % (la composition selon l'invention présentant ainsi une quantité d'eau sensiblement égale à 4 pce) et, d'autre part, des caractéristiques de surfaces spécifiques BET et CTAB qui sont celles de la silice « Zeosil 1165 MP ».
Il est à noter que la composition réticulable et expansible qui est destinée à constituer l'appui selon l'invention présente deux fois plus d'agent de gonflement que la composition « témoin ».
- Dans une seconde étape du procédé de fabrication, on a procédé à une extrusion de la composition de caoutchouc obtenue au terme de la première étape pour l'obtention d'une ébauche d'appui réticulable et expansible de section prédéterminée qui, dans cet exemple, est adaptée pour équiper à l'état réticulé et expansé des pneumatiques moto répondant aux dimensions précitées.
La température utilisée pour cette extrusion est inférieure ou égale à 100° C.
- Dans une troisième étape de cuisson, on a procédé à une cuisson préliminaire dans un moule de l'ébauche d'appui obtenue au terme de la seconde étape puis on a soumis l'ébauche précuite à une expansion et à une vulcanisation dans une étuve de type à plateau tournant, pour l'obtention d'un appui réticulé et expansé par décomposition thermique de l'agent de gonflement.

La température de vulcanisation est comprise entre 140° C et 160° C.

On notera que la teneur en eau de l'ébauche réticulable et expansible qui est utilisée dans le procédé selon l'invention est sensiblement de 4 pce, alors que la teneur en eau de l'ébauche destinée à constituer l'appui «témoin» est sensiblement égale à 0,5 pce (l'eau présente dans cette ébauche « témoin » provient essentiellement, d'une part, des molécules d'eau liées au noir de carbone et, d'autre part, de l'humidité ambiante qui est absorbée par la composition de caoutchouc).

On notera également que la présence de silice dans la charge renforçante de l'ébauche selon l'invention permet d'empêcher la décomposition de l'agent de gonflement lors de la cuisson préliminaire et, par conséquent, de permettre un démoulage qui ne fragilise pas l'ébauche précuite. En effet, on a vérifié que cette dernière est exempte de déchichures sur sa périphérie à l'emplacement des plans de joint du moule de cuisson préliminaire, suite à son démoulage.

### II. Comparaison des propriétés des appuis selon l'invention et « témoin »:

◇ On a cherché à comparer entre elles les densités respectives des appuis réticulés et expansés selon l'invention et « témoin », qui ont été obtenus par le procédé précité.

Le tableau II ci-après rend compte des densités moyennes obtenues pour chacun de ces appuis, ainsi que des densités obtenues à coeur et en périphérie (pour chaque appui de 60 mm de rayon qui est obtenu, on appelle « coeur de l'appui » un volume torique plein dont la section, concentrique à celle dudit appui, présente un rayon de 50 mm, et on appelle « périphérie de l'appui » un volume torique creux représentant le volume restant de l'appui et dont la section est une couronne de largeur radiale égale à 10 mm).

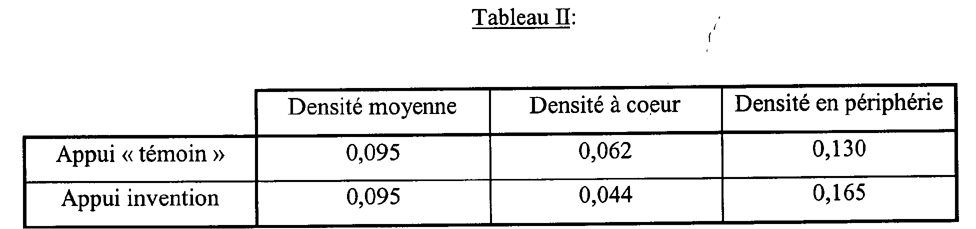

Ces résultats montrent que le gradient de densité entre la périphérie et le coeur de l'appui est plus élevé pour l'appui selon l'invention que pour l'appui « témoin ». En effet, ce gradient de densité, qui est dû à la décomposition fortement exothermique de l'agent de gonflement lors de l'expansion, est d'autant plus significatif que la quantité d'agent de gonflement utilisée dans l'étape initiale thermo-mécanique est plus élevée.

Dans cet exemple de réalisation, on notera que les températures à coeur et en périphérie des ébauches en cours d'expansion atteignent 190° C et 150° C, respectivement, alors que l'azobisformamide qui est utilisé à titre d'agent de gonflement commence à se décomposer dans la composition utilisée à une température de 140° C.

On a cherché à évaluer la quantité restante d'agent de gonflement (azobisformamide) dans ledit appui réticulé et expansé selon l'invention. A cet effet, on a procédé à un dosage de cet agent de gonflement présent dans une pluralité de tranches d'appui (secteurs toriques obtenus selon des coupes radiales), par la technique de chromatographie en phase liquide couplée à un spectrophotomètre ultraviolet / visible. L'azobisformamide est quantifiée par la méthode d'étalonnage externe. Les conditions d'extraction et les conditions chromatographiques utilisées sont indiquées ci-après.

On a réalisé l'extraction de l'azobisformamide de la composition au moyen d'un mélange de solvants d'extraction composé de 50 % de DMSO (diméthylsulfoxyde « Aldrich » de grade HPLC, soit pur à 99,9 %) et de 40 % de toluène (toluène « RP Normapur » de type « Prolabo» pour analyse, soit pur à 99,5 %). Le toluène permet de faire gonfler la composition de tranche d'appui, alors que le DMSO solubilise l'azobisformamide contenu dans cette composition. On utilise 1,8 ml de ce mélange de solvants pour 30 mg de composition.

On a réalisé cette extraction pendant 6 jours sur une machine à secousses puis, au terme de l'extraction, on a ajouté 0,2 ml de méthanol (méthanol «RP Normapur» type « Prolabo» pour analyse, soit pur à 99,8 %) pour coaguler à nouveau l'élastomère, afin de ne pas polluer la colonne chromatographique. On a ensuite filtré la solution obtenue au moyen d'un filtre de type PTFE / polypropylène « Millex » présentant une porosité de 0,5 µm. On a prélevé 1 à 2 ml du filtrat obtenu et on l'a conditionné dans un flacon, afin d'injecter 10 µl dans le système chromatographique.

Les conditions de chromatographie utilisées sont les suivantes :
- Colonne chromatographique : commercialisée sous la dénomination « Lichrosphère » (longueur de 25 cm, diamètre intérieur de 4,0 mm) phase stationnaire : silice greffée « diol », avec un diamètre des particules de 5 µm
- Eluant : Mélange de 90 % d'acétate d'éthyle « Aldrich » de grade HPLC (pur à 99,8 %), et de 10 % de cyclohexane « Carlo Erba » (pur à 99,8 % au minimum).
- Débit : 1ml / min.
- Volume d'injection : 10 µl.
- Détecteur: Spectrophotomètre UV à barette de diodes « Waters 996 », avec balayage des longueurs d'onde λ entre 200 et 400 nm (longueur d'onde de détection λₘₐₓ de l'azobisformamide = 254 nm).
- solvant de mise en solution : Pour l'étalonnage, on dissout l'azobisformamide dans le mélange constitué de DMSO / toluène / méthanol, selon des proportions de 50/40/10 (%)

Au moyen de cette méthode de dosage, on a procédé à l'analyse de plusieurs tranches distinctes dudit appui selon l'invention, chacune ayant été compactée et homogénéisée. Cette analyse a établi une quantité moyenne d'azobisformamide égale à 5,9 pce dans l'appui réticulé et expansé selon l'invention, contrairement audit appui «témoin» qui, à l'état réticulé et expansé, comporte une quantité sensiblement plus réduite d'agent de gonflement.

Une analyse microscopique des deux appuis obtenus montre par ailleurs que dans le cas de l'appui selon l'invention, les cellules périphériques présentent une forme se rapprochant d'un polyèdre oblong, alors que dans le cas de l'appui « témoin », elles présentent une forme du type de celle d'un polyèdre plus régulier (sensiblement une forme de dodécaèdre).

◇ On a cherché à comparer la variation de volume de l'appui selon l'invention à celle de l'appui « témoin », lors d'un chauffage de ces deux appuis d'une température initiale de 20° C à une température d'au moins 100° C, suivi d'un refroidissement de cette dernière température à la température initiale de 20° C.

Les résultats obtenus figurent sous forme d'indices dans les tableaux III et IV ci-après.
- Dans le tableau III, V0 désigne un indice de volume initial ramené à une base de 100, pour chaque appui se trouvant à une température de 20° C,
   V1 désigne l'indice de volume de chaque appui suite à un chauffage en étuve de 20° C à 100° C, et
   V0' désigne l'indice de volume de chaque appui suite à un refroidissement de 100° C à 20° C. Un indice supérieur à 100 suite à un chauffage ou un refroidissement témoigne d'un gonflement de l'appui (un indice inférieur à 100 témoignant d'une rétrécissement de l'appui). 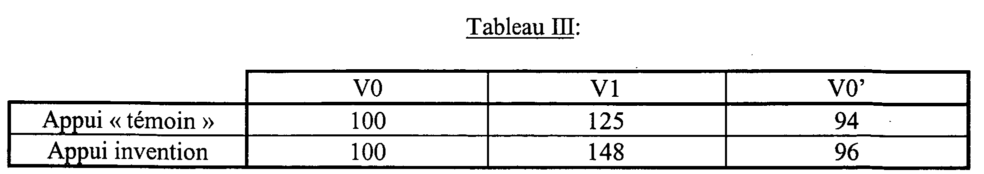 On en déduit, d'une part, que l'appui selon l'invention se dilate dans une plus grande mesure que l'appui « témoin » suite à une élévation de sa température interne à une température à laquelle l'eau commence à se vaporiser et, d'autre part, que cet appui de l'invention retrouve, suite à un retour à sa température initiale, un volume qui est plus proche de son volume initial que l'appui « témoin ».
- Dans le tableau IV, V0 désigne le même indice de volume initial ramené à une base de 100, pour chaque appui se trouvant à une température de 20° C,
   V1' désigne l'indice de volume de chaque appui suite à un chauffage en étuve de 20° C à 150° C, et
   V0" désigne l'indice de volume de chaque appui suite à un refroidissement de 150° C à 20° C.

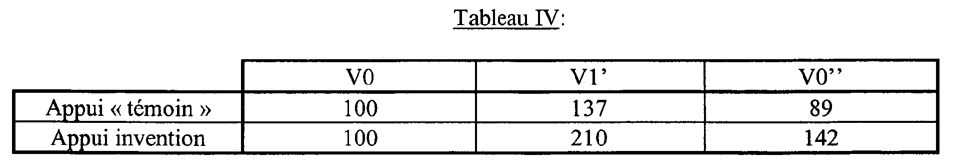

On en déduit, d'une part, que l'appui selon l'invention se dilate bien plus que l'appui « témoin » suite à une élévation de sa température interne à 150° C et, d'autre part, que cet appui de l'invention acquiert un volume qui est supérieur de 42 % à son volume initial suite à un retour à la température initiale, contrairement à l'appui « témoin» qui se rétrécit.

Cette augmentation de volume de l'appui selon l'invention a été confirmée en roulage à pression nulle et dans des conditions sévères, lorsqu'il équipe un ensemble monté de moto. En effet, on a déterminé que le volume de cet appui, suite à son extraction de l'ensemble monté après un roulage à pression nulle, a augmenté de 65 % par rapport au volume initial de l'appui avant ce roulage, cette augmentation étant supérieure à celle mesurée suite à l'étuvage précité à 150° C.

En d'autres termes, ces tableaux III et IV montrent que l'appui selon l'invention présente, grâce notamment à la quantité relativement élevée d'agent de gonflement qu'il comporte, un potentiel de regonflement plus élevé lors d'un roulage à pression nulle que l'appui « témoin », ce potentiel de regonflement se traduisant par un roulage effectué sous une pression plus élevée à l'intérieur de l'enveloppe de pneumatique.

◇ On a cherché également à comparer l'échauffement interne en roulage à pression nulle de l'appui selon l'invention à celui de l'appui « témoin ».

On a procédé à cet effet à un roulage d'ensembles montés pourvus respectivement de l'appui selon l'invention et l'appui « témoin », sur une rouleuse à volant lisse d'un mètre de diamètre, et l'on a suivi l'évolution de la température interne de chaque appui par la technique de « piquage » dans le coeur de l'appui à travers le pneumatique de chaque ensemble monté (au moyen d'une sonde de 2 mm de diamètre).

On a utilisé pour chaque appui l'ensemble monté dont les dimensions ont été mentionnées au paragraphe I.

Les conditions de charge sur l'ensemble monté et de vitesse de roulage ont été choisies de telle manière qu'elles soient proches de celles qui se rapportent aux épreuves spéciales de type rallye-raid. Plus précisément, la charge Z à laquelle a été soumis chaque ensemble monté était de 210 kg, ce qui correspond à une charge usuelle portant sur la roue arrière d'une moto de rallye-raid. Quant à la vitesse de roulage, elle a été maintenue à 150 km/h.

La pression équivalente initiale à l'intérieur du pneumatique était de 1,1 bar.

On notera que l'absence de choc qui caractérise ce roulage n'influe pratiquement pas sur cette évolution de température.

Le graphique de la Fig. unique rend compte de l'évolution de la température interne de chaque appui lors d'un tel roulage à pression d'air nulle.

Ce graphique montre une stabilisation de la température interne de l'appui selon l'invention à une température d'environ 150° C, sensiblement à partir de 20 minutes de roulage à pression d'air nulle, alors que la température interne de l'appui « témoin » continue à augmenter après cette durée de roulage et dépasse même 200° C au bout de 40 minutes.

On notera que l'appui selon l'invention peut assurer pendant plusieurs heures un fonctionnement pneumatique de l'enveloppe, en roulage à pression nulle, sans présenter de détérioration et sans endommager ladite enveloppe.

## Revendications

1. Ebauche réticulable et expansible d'appui de sécurité élastomère de structure cellulaire à cellules fermées, ledit appui étant destiné à être monté sur une jante de roue à l'intérieur d'une enveloppe de pneumatique, ladite ébauche comprenant au moins un élastomère diénique et de l'eau, **caractérisée en ce que** ledit élastomère diénique possède un taux molaire d'unités issues de diènes qui est inférieur à 15 %, et **en ce que** l'eau est présente dans ladite ébauche selon une quantité d'eau allant de 3 pce à 6 pce (pce: parties en poids pour cent parties d'élastomère(s)).

2. Ebauche réticulable et expansible selon la revendication 1, **caractérisée en ce qu'**elle comprend une charge renforçante comprenant de la silice, cette silice étant présente dans ladite ébauche selon une quantité allant de 10 à 30 pce.

3. Ebauche réticulable et expansible selon la revendication 2, **caractérisée en ce que** ladite charge renforçante comprend un coupage de ladite silice et de noir de carbone.

4. Ebauche réticulable et expansible selon la revendication 3, **caractérisée en ce que** la silice et le noir de carbone sont présents dans ladite charge renforçante selon des fractions massiques allant respectivement de 40 % à 60 % et de 60 % à 40 %.

5. Ebauche réticulable et expansible selon une des revendications précédentes, **caractérisée en ce que** ledit élastomère diénique est un copolymère d'isobutylène et d'un comonomère constitué d'isoprène ou de paraméthylstyrène.
